# EUROPÄISCHE PATENTANMELDUNG

(11) **EP 3 398 422 A1**
(43) Veröffentlichungstag der Anmeldung: **07.11.2018**
(21) Anmeldenummer: 18401040.3
(22) Anmeldetag: 18.04.2018
(51) Int. Cl.: A01C 5/06

(54) **ANDRUCKROLLE FÜR EINE SÄMASCHINE**

(30) Priorität: 04.05.2017 DE 102017109517
(71) Anmelder: Amazonen-Werke H. Dreyer GmbH & Co. KG, 49205 Hasbergen (DE)
(72) Erfinder: Westermann, Andre, 27777 Ganderkesee (DE)

(57) **Zusammenfassung**

Die Erfindung betrifft eine Andruckrolle (10) für eine Sämaschine, mit einer umlaufenden Rollenoberfläche (12), welche dazu eingerichtet ist, abgelegtes Saatgut (S) im Erdreich einzubetten, einer unterhalb der Rollenoberfläche (12) umlaufenden Luftkammer (20), deren Form veränderbar ist, und einem Ventil (18), mittels welchem der Luftdruck innerhalb der Luftkammer (20) veränderbar ist, wobei die Rollenoberfläche (12) und die Luftkammer (20) derart angeordnet und ausgebildet sind, dass eine Veränderung des Luftdrucks innerhalb der Luftkammer (20) eine Konturänderung und/oder eine Änderung des Walkverhaltens der Rollenoberfläche (12) bedingt.

## Beschreibung

Die Erfindung betrifft eine Andruckrolle für eine Sämaschine nach dem Oberbegriff des Patentanspruchs 1, ein Säaggregat für eine Sämaschine nach dem Oberbegriff des Patentanspruchs 7 und eine Sämaschine nach dem Oberbegriff des Patentanspruchs 8.

Sämaschinen werden üblicherweise zum Ausbringen unterschiedlicher Saatguttypen eingesetzt. Hierbei werden Säschare benutzt, welche das Saatgut in einer Saatfurche ablegen, wobei das in den einzelnen Saatfurchen abgelegte Saatgut mittels Andruckrollen, welche in Fahrtrichtung hinter den Säscharen angeordnet sind, in das Erdreich eingebettet wird.

Die eingesetzten Andruckrollen sind hierzu derart ausgestaltet, dass Erde in Richtung der Saatfurche gefördert wird, um die Saatfurche entsprechend zu verschließen. Der vertikale Abstand zwischen dem abgelegten und eingebetteten Saatgut und der oberhalb des Saatguts verlaufenden Bodenoberfläche wird dabei als Bedeckungshöhe bezeichnet.

Die beim Sävorgang erzeugte Bedeckungshöhe ist abhängig von der Kontur und dem Walkverhalten der Rollenoberfläche. Eine Sämaschine mit einer entsprechenden Andruckrolle ist beispielsweise aus der Druckschrift DE 29 34 121 A1 bekannt.

Die bisher eingesetzten Andruckrollen sind häufig als drucklose Gummirollen ausgebildet. Die Kontur und das Walkverhalten der Rollenoberfläche von drucklosen Gummirollen sind nicht veränderbar.

Es hat sich gezeigt, dass die optimale Bedeckungshöhe bei unterschiedlichen Saatguttypen variieren kann. Es existieren beispielsweise Saatguttypen, deren Keim- und Wachstumsverhalten bei einer vergleichsweise geringen Bedeckungshöhe optimal ist. Ebenso existieren Saatguttypen, deren Keim- und Wachstumsverhalten bei vergleichsweise großen Bedeckungshöhen optimal ist. Die Andruckrollen bekannter Sämaschinen erlauben jedoch lediglich die Erzeugung nur einer rolleneigenen Bedeckungshöhe, sodass eine Anpassbarkeit an unterschiedliche Saatguttypen nicht möglich ist.

Die der Erfindung zugrunde liegende Aufgabe besteht somit darin, eine Andruckrolle bereitzustellen, mittels welcher unterschiedliche Bedeckungshöhen erzeugt werden können, sodass eine Anpassung der Bedeckungshöhe an unterschiedliche Saatguttypen erfolgen kann.

Die Erfindung wird gelöst durch eine Andruckrolle der eingangs genannten Art, wobei eine Rollenoberfläche und eine Luftkammer der Andruckrolle derart angeordnet und ausgebildet sind, dass eine Veränderung des Luftdrucks innerhalb der Luftkammer mittels eines entsprechenden Ventils eine Konturänderung und/oder eine Änderung des Walkverhaltens der Rollenoberfläche bedingt.

Die Erfindung macht sich die Erkenntnis zunutze, dass eine Veränderung der Kontur und/oder des Walkverhaltens der Rollenoberfläche zu einem geänderten Verhalten der Andruckrolle hinsichtlich des Transports von Erde in Richtung der Saatfurche führt. Somit kann durch das Einstellen einer geeigneten Kontur der Rollenoberfläche und/oder eines geeigneten Walkverhaltens der Rollenoberfläche beispielsweise verhindert werden, dass bei flacher Saat, wie etwa bei der Aussaat von Raps oder Rüben, zu viel Erde in Richtung der Saatfurche transportiert und angedrückt wird. Entsprechend kann eine Anpassung der durch die Andruckrolle erzeugten Bedeckungshöhe an unterschiedliche Saatguttypen erfolgen.

In einer bevorzugten Ausführungsform der erfindungsgemäßen Andruckrolle ist die Luftkammer Bestandteil eines unterhalb der Rollenoberfläche angeordneten umlaufenden Schlauchs. Der Schlauch ist vorzugsweise aus einem elastischen und luftdichten synthetischen Kautschuk ausgebildet. Insbesondere ist der Schlauch aus Butylkautschuk ausgebildet. Alternativ oder zusätzlich kann der Schlauch als formgeheizter Schlauch oder als autoklavgeheizter Schlauch ausgebildet sein. Insbesondere ist der Schlauch derart in die Andruckrolle integriert, dass dieser zerstörungsfrei auswechselbar ist. Durch die zerstörungsfreie Auswechselbarkeit des Schlauches kann ein beschädigter Schlauch ohne hohen Reparaturaufwand ausgetauscht werden. Ferner können durch die Austauschbarkeit des Schlauchs Schläuche mit unterschiedlichen Querschnitten eingesetzt werden, um die Konturänderung und/oder die Änderung des Walkverhaltens bei Beaufschlagung des Schlauchs mit Luftdruck noch präziser auf das auszubringende Saatgut anpassen zu können.

In einer alternativen Ausführungsform ist die erfindungsgemäße Andruckrolle schlauchlos ausgebildet. Alternativ oder zusätzlich bildet der die Rollenoberfläche tragende Materialabschnitt einen Bewandungsabschnitt der Luftkammer aus. Durch die schlauchlose Ausbildung der Andruckrolle wird die Teileanzahl reduziert, wodurch die Endmontage vereinfacht wird. Ferner können Undichtigkeiten in der Luftkammer durch eine äußere Untersuchung der Andruckrolle identifiziert und lokalisiert werden. Vorzugsweise sind der die Rollenoberfläche tragende Materialabschnitt und/oder der die Luftkammer umschließende Materialabschnitt aus einem elastischen und luftdichten synthetischen Kautschuk ausgebildet.

Ferner ist eine erfindungsgemäße Andruckrolle bevorzugt, bei welcher die Wölbung der Rollenoberfläche und/oder die in Richtung einer Saatfurche geförderte Menge an Erde mittels des Luftdrucks innerhalb der Luftkammer veränderbar ist. Somit kann durch Beaufschlagung der Luftkammer mit einem ausreichenden Luftdruck beispielsweise eine nach außen gerichtete Wölbung an der Rollenoberfläche erzeugt werden. Ferner kann durch die Einstellung des Luftdrucks innerhalb der Luftkammer die Ausprägung der nach außen gerichteten Wölbung eingestellt werden. Darüber hinaus kann beispielsweise durch einen entsprechenden niedrigen Luftdruck innerhalb der Luftkammer eine nach innen gerichtete, also in Richtung der Rotationsachse der Andruckrolle gerichtete Wölbung erzeugt werden. Außerdem kann durch Einstellen des Luftdrucks die Ausprägung der nach innen gerichteten Wölbung angepasst werden. Ferner kann durch die Einstellung eines geeigneten Luftdrucks eine Wölbung der Rollenoberfläche im Wesentlichen vermieden werden, sodass die Rollenoberfläche eine im Wesentlichen umlaufende plane Aufstandsfläche ausbildet. Je stärker eine nach außen gerichtete Wölbung ausgeprägt ist, das heißt umso höher der Luftdruck innerhalb der Luftkammer ist, umso weniger Erde wird in Richtung der Saatfurche transportiert, woraus sich mit zunehmendem Luftdruck eine abnehmende Bedeckungshöhe ergibt. Je stärker eine nach innen gerichtete Wölbung ausgeprägt ist, das heißt je geringer der Luftdruck innerhalb der Luftkammer ausgebildet ist, desto mehr Erde wird in Richtung der Saatfurche transportiert, sodass sich aus einem abnehmenden Luftdruck innerhalb der Luftkammer eine zunehmende Bedeckungshöhe ergibt.

In einer anderen bevorzugten Ausführungsform der erfindungsgemäßen Andruckrolle ist die Andruckrolle durch eine Veränderung des Luftdrucks innerhalb der Luftkammer in einen ersten Zustand verbringbar, in welchem der Abstand zwischen der Rollenoberfläche und der Rotationsachse der Andruckrolle von einem mittig liegenden Abschnitt der Rollenoberfläche zu seitlich außen liegenden Abschnitten der Rollenoberfläche abnimmt. Alternativ oder zusätzlich kann die Andruckrolle durch eine Veränderung des Luftdrucks innerhalb der Luftkammer in einen zweiten Zustand verbracht werden, in welchem der Abstand zwischen der Rollenoberfläche und der Rotationsachse der Andruckrolle von einem mittig liegenden Abschnitt der Rollenoberfläche zu seitlich außen liegenden Abschnitten der Rollenoberfläche zunimmt. Alternativ oder zusätzlich kann die Andruckrolle durch eine Veränderung des Luftdrucks innerhalb der Luftkammer in einen dritten Zustand verbracht werden, in welchem der Abstand zwischen der Rollenoberfläche und der Rotationsachse der Andruckrolle von einem mittig liegenden Abschnitt der Rollenoberfläche zu seitlich außen liegenden Abschnitten der Rollenoberfläche im Wesentlichen konstant bleibt. Vorzugsweise weist die Andruckrolle eine Mittelebene auf, welche orthogonal zu der Rotationsachse der Andruckrolle verläuft, wobei die Kontur der Andruckrolle im Wesentlichen spiegelsymmetrisch gegenüber der Mittelebene verläuft.

In einer weiteren bevorzugten Ausführungsform der erfindungsgemäßen Andruckrolle ist das Ventil von außen zugänglich angeordnet. Durch die von außen zugängliche Anordnung des Ventils kann ein Bediener der entsprechenden Sämaschine oder ein Techniker direkt an der Andruckrolle eine Anpassung des Luftdrucks innerhalb der Luftkammer vornehmen, um die Kontur und/oder das Walkverhalten der Rollenoberfläche entsprechend dem auszubringenden Saatgut anzupassen. Das Ventil ist vorzugsweise derart angeordnet und ausgerichtet, dass es nicht über die seitlichen Flanken des die Rollenoberfläche tragenden Materialabschnitts herausragt. Auf diese Weise ist das Ventil durch die Rollenstruktur vor einer durch Hindernisse hervorgerufenen Stoßbeanspruchung geschützt.

Die der Erfindung zugrunde liegende Aufgabe wird ferner durch ein Säaggregat der eingangs genannten Art gelöst, wobei die Andruckrolle des Säaggregats nach einer der vorstehend beschriebenen Ausführungsformen ausgebildet ist. Hinsichtlich der Vorteile und Modifikationen des erfindungsgemäßen Säaggregats wird auf die Vorteile und Modifikationen der erfindungsgemäßen Andruckrolle verwiesen.

Die der Erfindung zugrunde liegende Aufgabe wird ferner durch eine Sämaschine der eingangs genannten Art gelöst, wobei einzelne oder sämtliche Säaggregate und/oder einzelne oder sämtliche Andruckrollen der mehreren Säaggregate nach einer der vorstehend beschriebenen Ausführungsformen ausgebildet sind. Hinsichtlich der Vorteile und Modifikationen der erfindungsgemäßen Sämaschine wird zunächst auf die Vorteile und Modifikationen des erfindungsgemäßen Säaggregats und die Vorteile und Modifikationen der erfindungsgemäßen Andruckrolle verwiesen.

In einer besonders bevorzugten Ausführungsform umfasst die erfindungsgemäße Sämaschine eine Eingabeeinrichtung, welche die Eingabe einer gewünschten Bedeckungshöhe des Saatguts und/oder die Auswahl eines auszusäenden Saatguts durch einen Maschinenbediener erlaubt. Vorzugsweise verfügt die Sämaschine über einen Speicher, in welchem unterschiedliche Bedeckungshöhen für auswählbare Saatguttypen hinterlegt sind. Auf diese Weise benötigt der Maschinenbediener keine Kenntnis über die optimale Bedeckungshöhe des auszubringenden Saatguts. Die Konfiguration der Sämaschine vor dem Beginn des Sävorgangs wird somit erheblich vereinfacht.

In einer weiteren bevorzugten Ausführungsform weist die erfindungsgemäße Sämaschine eine Steuerungseinrichtung auf, welche dazu eingerichtet ist, abhängig von der eingegebenen Bedeckungshöhe und/oder des ausgewählten Saatguts eine Veränderung des Luftdrucks innerhalb der Luftkammern einzelner oder sämtlicher Andruckrollen der Sämaschine zu verursachen. Die Einstellung der für das auszubringende Saatgut optimalen Kontur der Rollenoberfläche sowie die Einstellung des für das auszubringende Saatgut optimalen Walkverhaltens der Rollenoberfläche wird durch eine entsprechende Steuerung des Luftdrucks innerhalb der Luftkammern einzelner oder sämtlicher Andruckrollen erheblich beschleunigt. Die Steuerungseinrichtung ist hierzu vorzugsweise signalleitend mit der Eingabeeinrichtung und/oder dem Speicher der Sämaschine verbunden.

In einer bevorzugten Ausführungsform weist die erfindungsgemäße Sämaschine eine Luftdruckverstelleinrichtung auf, mittels welcher der Luftdruck innerhalb der Luftkammern einzelner oder sämtlicher Andruckrollen der Sämaschine und/oder die durch sämtliche oder einzelne Andruckrollen erzeugte Bedeckungshöhe manuell einstellbar ist. Somit kann ein Maschinenbediener oder Techniker vor Beginn des Sävorgangs durch die Betätigung der Luftdruckverstelleinrichtung direkt an der Sämaschine eine geeignete Bedeckungshöhe einstellen. Die Luftdruckverstelleinrichtung kann beispielsweise einen Touchscreen, einen oder mehrere Schalter, eine oder mehrere Tasten und/oder ein Drehrad aufweisen. Vorzugsweise ist die Luftdruckverstelleinrichtung in dem Bereich einer Schardruckverstelleinrichtung angeordnet, sodass die Einstellung einer geeigneten Maschinenkonfiguration ohne einen Standortwechsel des Maschinenbedieners erfolgen kann.

Weitere Einzelheiten der Erfindung sind der Figurenbeschreibung und den Zeichnungen zu entnehmen. Es zeigen
- Fig. 1: ein Ausführungsbeispiel eines erfindungsgemäßen Säaggregats in einer perspektivischen Darstellung;
- Fig. 2: ein Ausführungsbeispiel einer erfindungsgemäßen Andruckrolle und eine Rollenaufhängung in einer perspektivischen Darstellung;
- Fig. 3: die in der Fig. 2 dargestellte Andruckrolle in einer perspektivischen Darstellung;
- Fig. 4: ein Ausführungsbeispiel einer erfindungsgemäßen Andruckrolle in einer Schnittdarstellung in einem ersten Zustand;
- Fig. 5: die in der Fig. 4 dargestellte Andruckrolle in einem zweiten Zustand;
- Fig. 6: die in der Fig. 4 dargestellte Andruckrolle in einem dritten Zustand; und
- Fig. 7: Teile einer erfindungsgemäßen Sämaschine in einer schematischen Darstellung.

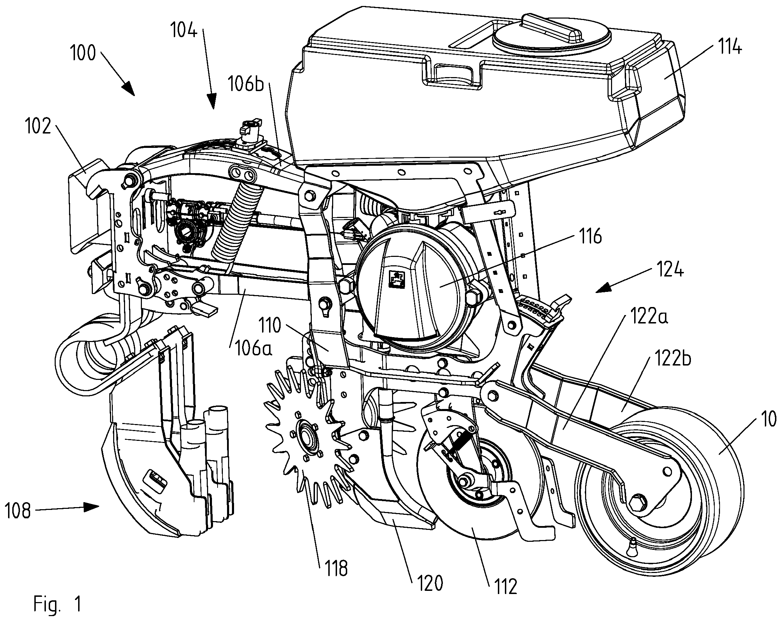

Die Fig. 1 zeigt ein Säaggregat 100 einer Sämaschine. Das Säaggregat 100 ist dazu eingerichtet, Saatgut und/oder Dünger auf einem zu bearbeitenden Boden abzulegen und das Saatgut und/oder den Dünger in das Erdreich einzubetten.

Das Säaggregat 100 ist an einem quer zur Fahrtrichtung der Sämaschine verlaufenden Scharbalken 102 befestigt und weist eine als Parallelogramm-Gestänge ausgebildete Scharaufhängung 104 auf. Die Scharaufhängung 104 umfasst einen Unterlenker 106a und einen Oberlenker 106b, welche zum Einstellen des Schardrucks und/oder zum Ausheben des Säaggregats 100 jeweils um eine horizontal und quer zur Fahrtrichtung der Sämaschine verlaufende Schwenkachse verschwenkbar sind.

An der dem Scharbalken 102 zugewandten Seite ist die Scharaufhängung 104 mit einem Düngerschar 108 verbunden. Das Düngerschar 108 ist als Schleppdüngerschar ausgebildet und dazu eingerichtet, Dünger auf einen zu bearbeitenden Boden abzulegen. An der dem Scharbalken 102 abgewandten Seite ist die Scharaufhängung 104 mit einer Scharhaltung 110 verbunden.

An der Scharhalterung 110 ist ein Säschar 112 befestigt. Das Säschar 112 ist zur Ablage von Saatgut eingerichtet und als Doppelscheibensäschar ausgebildet. Das Saatgut wird in dem Saatgutbehälter 114 bevorratet. Der Saatgutbehälter 114 ist mit einer Vereinzelungseinrichtung 116 verbunden, über welche dem Säschar 112 vereinzelte Saatgutkörner zugeführt werden.

In Fahrtrichtung vor dem Säschar 112 sind ein Sternräumer 118 und ein Klutenräumer 120 angeordnet. Der Sternräumer 118 dient zum Abtransport von organischem Material aus dem Bereich der Saatfurche. Der Klutenräumer 120 schiebt zusätzlich trockenen Boden und Schollen von dem Bereich der Saatfurche weg.

In Fahrtrichtung hinter dem Säschar 112 ist eine Andruckrolle 10 angeordnet, welche über eine Rollenaufhängung 122a, 122b mit der Scharhaltung 110 verbunden ist. Die Rollenaufhängung 122a, 122b ist samt der Andruckrolle 10 über die Tiefenverstellung 124 um eine horizontale und quer zur Fahrtrichtung verlaufende Schwenkachse verschwenkbar. Die Andruckrolle 10 stützt das Säaggregat 100 gegenüber dem Boden ab, sodass mittels der Tiefenverstellung 124 über die Relativposition von Säschar 112 und Andruckrolle 10 die Ablagetiefe des Säschars 112 eingestellt werden kann.

Die Andruckrolle 10 weist eine umlaufende Rollenoberfläche 12 auf, welche dazu eingerichtet ist, abgelegtes Saatgut im Erdreich einzubetten. Die Einbettung des Saatguts erfolgt dabei derart, dass die Andruckrolle 10 Erde aufgrund der Kontur und des Walkverhaltens der Rollenoberfläche 12 in Erde in Richtung der Saatfurche transportiert. Die in Richtung der Saatfurche transportierte Erde bedeckt das Saatgut und bildet oberhalb des Saatguts eine geschlossene Erdschicht aus, wobei der vertikale Abstand zwischen dem abgelegten und eingebetteten Saatgut und der oberhalb des Saatguts verlaufenden Bodenoberfläche als Bedeckungshöhe bezeichnet wird.

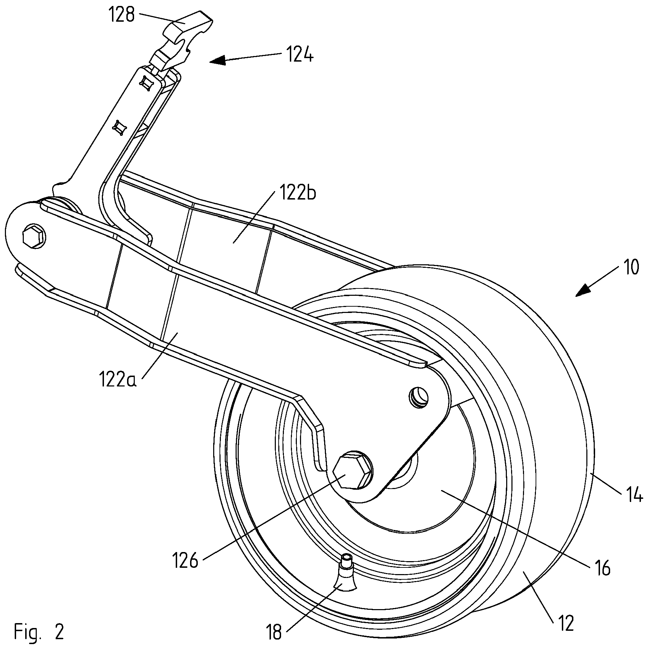

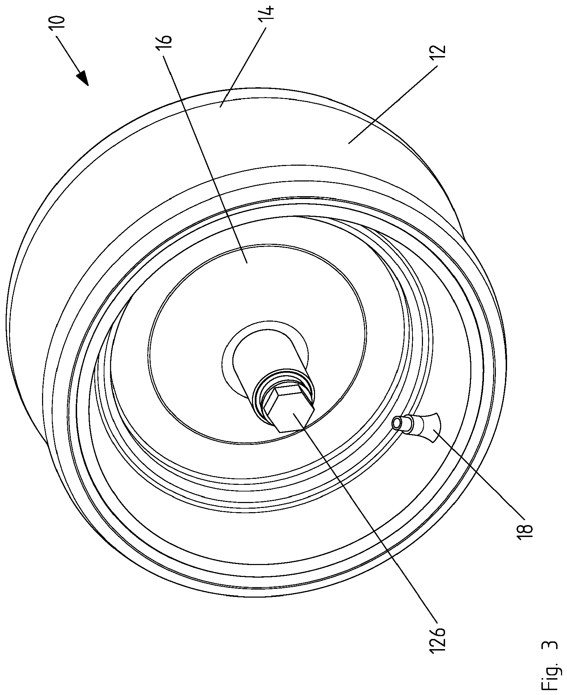

Gemäß der Fig. 2 und der Fig. 3 weist die Andruckrolle 10 einen Mantel 14 und eine Felge 16 auf. Darüber hinaus umfasst die Andruckrolle 10 ein Ventil 18, mittels welchem der Luftdruck innerhalb einer unterhalb der Rollenoberfläche 12 angeordneten Luftkammer (verdeckt) veränderbar ist. Das Ventil 18 ist derart angeordnet, dass es von einem Maschinenbediener von außen ohne Werkzeugeinsatz zugänglich ist.

Die Felge 16 der Andruckrolle 10 ist über ein als Bolzen ausgebildetes Befestigungselement 126 mit der Rollenaufhängung 122a, 122b verbunden, wobei die Rollenaufhängung 122a, 122b zwei parallel verlaufende Streben aufweist. Die Rollenaufhängung 122a, 122b ist mit der Tiefenverstellung 124 verbunden, wobei die Tiefenverstellung 124 ein Griffstück 128 aufweist, welches von einem Maschinenbediener gegriffen werden kann zur Verstellung der Ablagetiefe in unterschiedliche Rastpositionen verbringbar ist. Über die unterschiedlichen Rastpositionen kann die Ausrichtung der Rollenaufhängung 122a, 122b und der Andruckrolle 10 eingestellt werden.

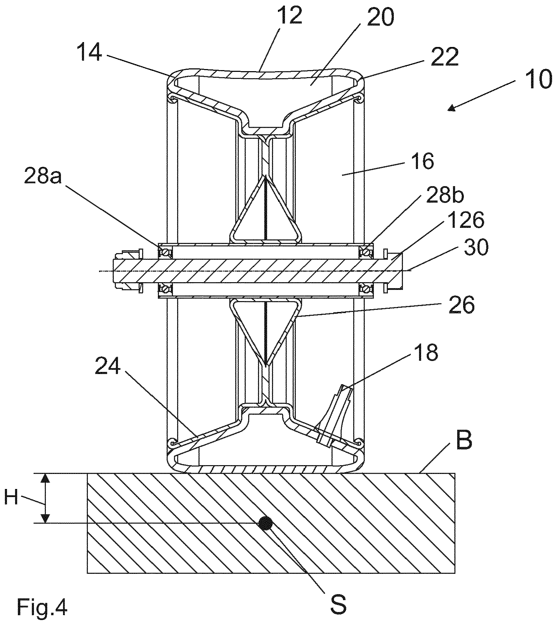

Die Fig. 4, 5 und 6 zeigen eine Andruckrolle 10 in unterschiedlichen Zuständen. Die dargestellten Zustände unterscheiden sich durch den innerhalb der Luftkammer 20 wirkenden Luftdruck.

Die Luftkammer 20 ist unterhalb der Rollenoberfläche 12 angeordnet und umlaufend ausgebildet. Die Luftkammer 20 ist Bestandteil eines unterhalb der Rollenoberfläche 12 angeordneten umlaufenden Schlauchs 22, wobei die Form der Luftkammer 20 aufgrund der Elastizität des Schlauchs 22 veränderbar ist. Das Ventil 18 ist mit der Luftkammer 20 gekoppelt, wobei mittels des Ventils 18 der Luftdruck innerhalb der Luftkammer 20 veränderbar ist.

Die Rollenoberfläche 12 und die Luftkammer 20 der Andruckrolle 10 sind derart angeordnet und ausgebildet, dass eine Veränderung des Luftdrucks innerhalb der Luftkammer 20 eine Konturänderung und eine Änderung des Walkverhaltens der Rollenoberfläche 12 bedingt. Durch die Konturänderung und die Änderung des Walkverhaltens der Rollenoberfläche 12 kann eingestellt werden, welche Erdmenge von der Andruckrolle in Richtung der Saatfurche transportiert wird, sodass über die Kontur und das Walkverhalten der Rollenoberfläche 12 die von der Andruckrolle erzeugte Bedeckungshöhe H des Saatguts S, das heißt der Abstand zwischen dem Saatgut S und der Bodenoberfläche B einstellbar ist.

Der Schlauch 22 stützt sich an der Felgenschulter 24 ab, wobei die Felgenschulter 24 durch ein Stützsegment 26 gehalten wird. Somit kann die Wölbung der Rollenoberfläche 12 und die in Richtung der Saatfurche geförderte Menge an Erde mittels des Luftdrucks innerhalb der Luftkammer 20 verändert werden. Zwischen dem Befestigungselement 126 und der Felge 16 sind zwei voneinander beabstandet angeordnete Lager 28a, 28b angeordnet.

In dem in der Fig. 4 dargestellten Zustand der Andruckrolle 10 bleibt der Abstand zwischen der Rollenoberfläche 12 und der Rotationsachse 30 der Andruckrolle 10 von einem mittig liegenden Abschnitt der Rollenoberfläche 12 zu seitlich außen liegenden Abschnitten der Rollenoberfläche 12 im Wesentlichen konstant.

Die durch den Luftdruck innerhalb der Luftkammer 20 bedingte Kontur und das Walkverhalten der Rollenoberfläche 12 führen dazu, dass die Bodenoberfläche B oberhalb das Saatguts S im Wesentlichen plan verläuft, sodass das Erzeugen einer Erhöhung oder einer Senke oberhalb des Saatguts S vermieden wird. In diesem Fall entspricht die Bedeckungshöhe H im Wesentlichen der Ablagetiefe des Saatguts S.

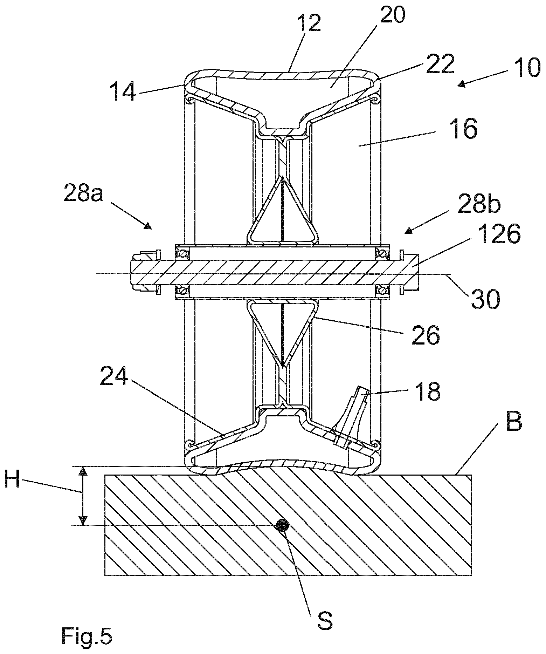

In dem in der Fig. 5 dargestellten Zustand wurde der Luftdruck innerhalb der Luftkammer 20 gegenüber dem in der Fig. 4 dargestellten Zustand verringert, sodass der Abstand zwischen der Rollenoberfläche 12 und der Rotationsachse 30 der Andruckrolle 10 von einem mittig liegenden Abschnitt der Rollenoberfläche 12 zu seitlich außen liegenden Abschnitten der Rollenoberfläche 12 zunimmt.

Die durch den Luftdruck innerhalb der Luftkammer 20 bedingte Kontur und das Walkverhalten der Rollenoberfläche 12 führen dazu, dass die Bodenoberfläche B oberhalb des Saatguts S eine Erhöhung aufweist, sodass die Bedeckungshöhe H größer ist als die Ablagetiefe des Saatguts S.

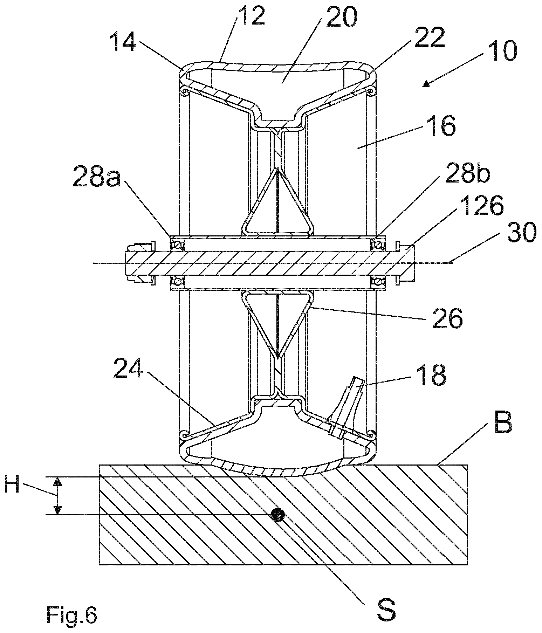

In dem in der Fig. 6 dargestellten Zustand wurde der Luftdruck innerhalb der Luftkammer 20 gegenüber dem in der Fig. 4 dargestellten Zustand erhöht, sodass der Abstand zwischen der Rollenoberfläche 12 und der Rotationsachse 30 der Andruckrolle 10 von einem mittig liegenden Abschnitt der Rollenoberfläche 12 zu seitlich außen liegenden Abschnitten der Rollenoberfläche 12 abnimmt.

Die durch den Luftdruck innerhalb der Luftkammer 20 bedingte Kontur und das Walkverhalten der Rollenoberfläche 12 führen dazu, dass die Bodenoberfläche B oberhalb des Saatguts S eine Senke aufweist, sodass die Bedeckungshöhe H kleiner ist als die Ablagetiefe des Saatguts S.

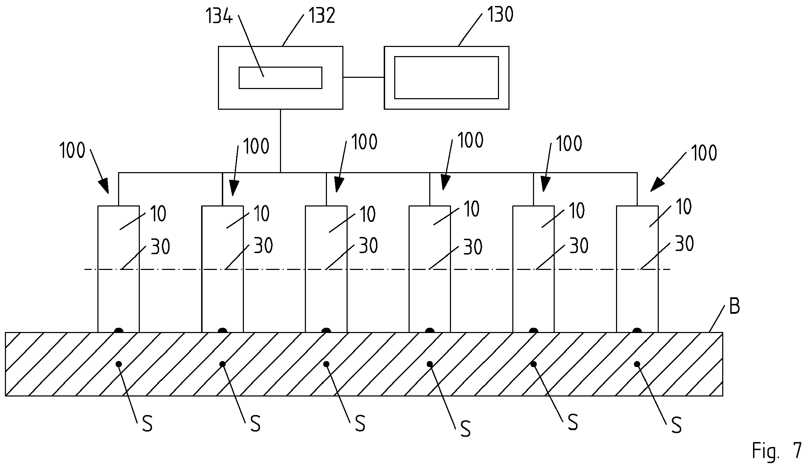

Die Fig. 7 zeigt eine Sämaschine mit mehreren Andruckrollen 10, wobei jede Andruckrolle 10 einem Säaggregat 100 zugeordnet ist. Die Sämaschine umfasst eine Eingabeeinrichtung 130, welche als Touchscreen ausgebildet ist und die Eingabe einer gewünschten Bedeckungshöhe H des Saatguts S erlaubt. Zusätzlich erlaubt die Eingabeeinrichtung 130 die Auswahl eines auszusäenden Saatguts S durch einen Maschinenbediener.

Die Eingabeeinrichtung 130 ist mit einer Steuerungseinrichtung 132 verbunden, welche dazu eingerichtet ist, abhängig von der eingegebenen Bedeckungshöhe H und/oder des ausgewählten Saatguts S eine Veränderung des Luftdrucks innerhalb der Luftkammern der Andruckrollen 10 zu verursachen. Ferner weist die Steuerungseinrichtung 132 einen Speicher 134 auf, in welchem für auswählbare Saatguttypen geeignete Bedeckungshöhen H hinterlegt sind.

### Bezugszeichenliste

- 10: Andruckrolle
- 12: Rollenoberfläche
- 14: Mantel
- 16: Felge
- 18: Ventil
- 20: Luftkammer
- 22: Schlauch
- 24: Felgenschulter
- 26: Stützsegment
- 28a,28b: Lager
- 30: Rotationsachse
- 100: Säaggregat
- 102: Scharbalken
- 104: Scharaufhängung
- 106a, 106b: Lenker
- 108: Düngerschar
- 110: Scharhaltung
- 112: Säschar
- 114: Saatgutbehälter
- 116: Vereinzelungseinrichtung
- 118: Sternräumer
- 120: Klutenräumer
- 122a, 122b: Rollenaufhängung
- 124: Tiefenverstellung
- 126: Befestigungselement
- 128: Griffstück
- 130: Eingabeeinrichtung
- 132: Steuerungseinrichtung
- 134: Speicher
- H: Bedeckungshöhe
- B: Bodenoberfläche
- S: Saatgut

## Patentansprüche

1. Andruckrolle (10) für eine Sämaschine, mit
- einer umlaufenden Rollenoberfläche (12), welche dazu eingerichtet ist, abgelegtes Saatgut (S) im Erdreich einzubetten;
- einer unterhalb der Rollenoberfläche (12) umlaufenden Luftkammer (20), deren Form veränderbar ist; und
- einem Ventil (18), mittels welchem der Luftdruck innerhalb der Luftkammer (20) veränderbar ist;
**dadurch gekennzeichnet, dass** die Rollenoberfläche (12) und die Luftkammer (20) derart angeordnet und ausgebildet sind, dass eine Veränderung des Luftdrucks innerhalb der Luftkammer (20) eine Konturänderung und/oder eine Änderung des Walkverhaltens der Rollenoberfläche (12) bedingt.

2. Andruckrolle (10) nach Anspruch 1,
**dadurch gekennzeichnet, dass** die Luftkammer (20) Bestandteil eines unterhalb der Rollenoberfläche (12) angeordneten umlaufenden Schlauchs (22) ist.

3. Andruckrolle (10) nach Anspruch 1,
**dadurch gekennzeichnet, dass** die Andruckrolle (10) schlauchlos ausgebildet ist und/oder der die Rollenoberfläche (12) tragende Materialabschnitt einen Bewandungsabschnitt die Luftkammer (20) ausbildet.

4. Andruckrolle (10) nach einem der vorstehenden Ansprüche,
**dadurch gekennzeichnet, dass** die Wölbung der Rollenoberfläche (12) und/oder die in Richtung einer Saatfurche geförderte Menge an Erde mittels des Luftdrucks innerhalb der Luftkammer (20) veränderbar ist.

5. Andruckrolle (10) nach einem der vorstehenden Ansprüche,
**dadurch gekennzeichnet, dass** durch eine Veränderung des Luftdrucks innerhalb der Luftkammer (20) die Andruckrolle (10) zumindest in einen der folgenden Zustände verbringbar ist:
- einen ersten Zustand, in welchem der Abstand zwischen der Rollenoberfläche (12) und der Rotationsachse (30) der Andruckrolle (10) von einem mittig liegenden Abschnitt der Rollenoberfläche (12) zu seitlich außen liegenden Abschnitten der Rollenoberfläche (12) abnimmt;
- einen zweiten Zustand, in welchem der Abstand zwischen der Rollenoberfläche (12) und der Rotationsachse (30) der Andruckrolle (10) von einem mittig liegenden Abschnitt der Rollenoberfläche (12) zu seitlich außen liegenden Abschnitten der Rollenoberfläche (12) zunimmt;
- einen dritten Zustand, in welchem der Abstand zwischen der Rollenoberfläche (12) und der Rotationsachse (30) der Andruckrolle (10) von einem mittig liegenden Abschnitt der Rollenoberfläche (12) zu seitlich außen liegenden Abschnitten der Rollenoberfläche (12) im Wesentlichen konstant bleibt.

6. Andruckrolle (10) nach einem der vorstehenden Ansprüche,
**dadurch gekennzeichnet, dass** das Ventil (18) von außen zugänglich angeordnet ist.

7. Säaggregat (100) für eine Sämaschine, mit
- einem Säschar (112) zur Ablage von Saatgut (S); und
- einer Andruckrolle (10), welche in Fahrtrichtung hinter dem Säschar (112) angeordnet und dazu eingerichtet ist, das von dem Säschar (112) abgelegte Saatgut (S) einzubetten;
**dadurch gekennzeichnet, dass** die Andruckrolle (10) nach einem der vorstehenden Ansprüche ausgebildet ist.

8. Sämaschine, mit
- mehreren Säaggregaten (100),
**dadurch gekennzeichnet, dass** einzelne oder sämtliche Säaggregate (100) nach Anspruch 7 und/oder einzelne oder sämtliche Andruckrollen (10) der mehreren Säaggregate (100) nach einem der Ansprüche 1 bis 6 ausgebildet sind.

9. Sämaschine nach Anspruch 8,
**gekennzeichnet durch** eine Eingabeeinrichtung (130), welche die Eingabe einer gewünschten Bedeckungshöhe (H) des Saatguts (S) und/oder die Auswahl eines auszusäenden Saatguts (S) durch einen Maschinenbediener erlaubt.

10. Sämaschine nach Anspruch 9,
**gekennzeichnet durch** eine Steuerungseinrichtung (132), welche dazu eingerichtet ist, abhängig von der eingegebenen Bedeckungshöhe (H) und/oder des ausgewählten Saatguts (S) eine Veränderung des Luftdrucks innerhalb der Luftkammern (20) einzelner oder sämtlicher Andruckrollen (10) der Sämaschine zu verursachen.

11. Sämaschine nach einem der Ansprüche 8 bis 10,
**gekennzeichnet durch** eine Luftdruckverstelleinrichtung, mittels welcher der Luftdruck innerhalb der Luftkammern (20) einzelner oder sämtlicher Andruckrollen (10) der Sämaschine und/oder die durch sämtliche oder einzelne Andruckrollen (10) erzeugte Bedeckungshöhe (H) manuell einstellbar ist.
